(19) Europäisches Patentamt
European Patent Office
Office européen des brevets

(11) EP 4 759 527 A1

(12) EUROPEAN PATENT APPLICATION

(43) Date of publication:
**17.06.2026 Bulletin 2026/25**

(21) Application number: **24307074.5**

(22) Date of filing: **11.12.2024**

(51) International Patent Classification (IPC):
***B29D 11/00*** *(2006.01)*

(52) Cooperative Patent Classification (CPC):
**B29D 11/00009; B29D 11/00528; B29D 11/00634; B29D 11/00903**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Essilor International**
**94220 Charenton-Le-Pont (FR)**

(72) Inventors:
- **FROMENTIN, Pierre**
  **10240 BANGKOK (TH)**
- **WONGSARTSAI, Chuthamas**
  **77110 Hua hin, Prachuap khiri khan (TH)**

(74) Representative: **Plasseraud IP**
**104 Rue de Richelieu**
**CS92104**
**75080 Paris Cedex 02 (FR)**

# (54) UV-CUTTING PHOTOPOLYMERIZED LENSES

(57) The present application relates to a method of manufacturing a polymeric cast substrate, the method comprising the steps of:
- providing a casting mold assembly containing two unsealed mold parts each having an inside surface and an outside surface, the inside surface of at least one of the unsealed mold parts comprising a composition comprising a UV absorbing agent;
- arranging the inside surfaces of the mold parts opposite to each other and closing the casting mold assembly so that the inside surfaces of both mold parts form together the molding cavity;
- filling a polymerizable composition in the molding cavity;
- curing the polymerizable composition in the mold assembly to obtain a polymeric cast substrate.

The present application further relates to an optical article, preferably a lens, comprising a polymeric cast substrate manufactured according to this method, and also relates to an eyewear comprising such optical article.

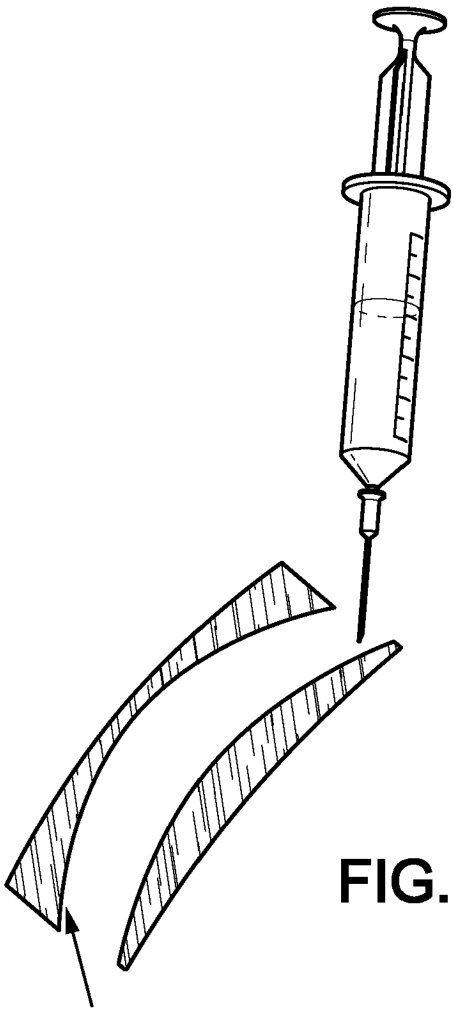

FIG. 2

EP 4 759 527 A1

## Description

### FIELD

The current invention provides a method of manufacturing a polymeric cast substrate, such as UV cut lenses, in particular UV cut ophthalmic lenses.

### BACKGROUND

UV cut polymeric cast substrates are designed to block or filter out harmful ultraviolet (UV) radiation and have a protective role against UV damage. UV cut polymeric substrates are particularly suitable to offer protection to the eyes against such potentially harmful light.

UV light is the portion of the luminous spectrum between 100 nm to 400 nm. The UV spectrum has many bands, especially UVA, UVB and UVC bands. Amongst those UV bands reaching the earth surface, the UVA band, ranging from 315 nm to 380 nm, and the UVB band, ranging from 280 nm to 315 nm, are particularly harmful to the retina.

UV absorbing agents are frequently incorporated in optical articles in order to reduce or prevent UV light from reaching the retina (in particular in ophthalmic lens materials), but also to protect the substrate material itself, thus preventing it from weathering and becoming brittle and/or yellow.

UV absorbing agents can be incorporated into the finished product through different technologies at different locations, generally in a coating such as a hard coat, but also in the bulk formulation.

In many instances, post casting UV cut introduction is challenging as the extinction of classic UV absorbing agents calls for significantly high concentrations that are not necessarily compatible with their application method. Some examples are given below.

Tinting, as a known post-casting approach, is usually limited by the penetration depth of the UV absorbing agent, precluding high UV cut. Tinting includes a step upon which the lens is dipped into a liquid bath containing the UV absorbing agent. It then penetrates the lenses by diffusion in polymer network. This approach is however not practical as it calls for a specific process step. In addition, as mentioned above, it is complex to reach high UV cut levels with classic UV absorbing agents as the quantity that can be loaded this way is pretty small versus extinction thereof.

Similarly, the lens may be coated with a layer containing UV absorbing agents, but this technique implies using very high concentrations of said agents to be able to deliver the required UV cut, jeopardizing their mechanical properties. Similarly to the above, the concentration of such absorbing agents has to be very high versus other coating components, making it poor in terms of mechanical performance.

Other post-casting approaches include antireflective design to reject UV, but at the expense of other properties typically brought by such treatments.

Incorporating UV absorbing agents in the bulk polymerizable composition is considered. The use of latent UV absorbing agents, such as benzoylated derivatives of benzotriazoles, is an example. Yet very attractive, this approach has hardly proven usable case of photopolymerized lenses, as the deprotection stage to recover the unprotected hydroxyphenyl benzotriazole called for long irradiation time and the resulting yellow index would be very high.

Furthermore, designing photo base generators that could be triggered at higher wavelength than that absorbed by the UV absorbing agents was also considered. This approach would however feature visible absorbing photo base generators that could also lead to high yellow index especially if they don't photo bleach in a suitable way.

It has also been observed that when a UV absorbing agent is introduced in the bulk photopolymerizable composition, the photopolymerization is highly impaired as said formulation would only be partly cured or remain liquid after UV exposure.

In view of the foregoing issues, there is a need for an optical material comprising a means capable of at least partially blocking transmission of UV light that is compatible with the other components of the optical polymerizable composition, without impairing the complete polymerization of the optical polymerizable composition and mechanical properties of the final polymeric cast substrate. It is also desirable that the optical material exhibits a low level of yellowness and no cosmetic defects, such as haziness or lack of homogeneity, while maintaining thermo-mechanical resistance.

The process for manufacturing such a polymeric cast substrate should be simple, easy to implement and reproducible. Another objective is to enhance productivity by shortening the preparation time of the polymeric cast substrate.

To address the needs of the present invention and to remedy the mentioned drawbacks of the prior art, the applicant provides a new manufacturing method.

### SUMMARY

According to a first aspect, the present invention is directed to a method of manufacturing a polymeric cast

substrate, the method comprising the steps of:

- providing a casting mold assembly containing two unsealed mold parts each having an inside surface and an outside surface; the inside surface of at least one of the unsealed mold parts comprising a composition comprising a UV absorbing agent
- arranging the inside surfaces of the mold parts opposite to each other and closing the casting mold assembly so that the inside surfaces of both mold parts form together the molding cavity;
- filling a polymerizable composition in the molding cavity;
- curing the polymerizable composition in the mold assembly to obtain a polymeric cast substrate.

While many approaches might be considered to overcome this issue by introducing the UV cutting function after lens is photopolymerized, it is far more advantageous to use the substrate as the carrier for this function. As a matter of fact, introducing the UV absorbing agent at the casting stage save a process step in case of tinting or specific UV coating use.

The present method helps keep the substrate as the host for UV cut, without impairing the photocuring process. It thus has the advantages of being a simple process to implement as the mold parts are sprayed before assembly, all subsequent steps remaining the same. The method also ensures a high UV cut level, by using UV absorbing agents within classic extinction range (epsilon within the 15,000 or 30,000 range). This process is designed to accommodate a wide variety of UV absorbing agents, ensuring flexibility and ease of adaptation across different applications. Furthermore, another advantage of this method is that there is no more need for any additional specific process steps post-casting to introduce the UV cut function, making the process highly efficient and easy to streamline.

According to another aspect, the present disclosure relates to a lens comprising a polymeric cast substrate obtained from the curing of a mixture of one or more polyisocyanate(s) with one or more polythiol(s) or polyol(s), the thickness of the substrate being defined by the distance between a front surface and a rear surface, wherein the polymeric cast substrate comprises a gradient of concentration of a UV absorbing agent from the front surface to the rear surface along said thickness of the substrate.

The UV absorbing agent is advantageously strategically distributed along a concentration gradient, where it is more concentrated on one surface, preferably the front surface, and gradually reduces toward the other, preferably the rear surface. This intentional design enhances the polymeric cast substrate's protective properties against UV light. The surface, preferably the front surface, with the higher concentration of the compound acts as a stronger barrier, effectively absorbing and reflecting harmful UV radiation. Meanwhile, the gradual reduction in concentration on the opposite side allows for a balanced interaction with light and environmental factors.

It is herein disclosed the following items.

A. A method of manufacturing a polymeric cast substrate, the method comprising the steps of:

- providing a casting mold assembly containing two unsealed mold parts each having an inside surface and an outside surface, the inside surface of at least one of the unsealed mold parts comprising a composition comprising a UV absorbing agent;
- arranging the inside surfaces of the mold parts opposite to each other and closing the casting mold assembly so that the inside surfaces of both mold parts form together the molding cavity;
- filling a polymerizable composition in the molding cavity;
- curing the polymerizable composition in the mold assembly to obtain a polymeric cast substrate.

A1. The method according to item A, wherein the composition comprising a UV absorbing agent is being depositing on the inside surface of only one unsealed mold part.

B. The method according to item A or A1, wherein depositing the composition comprising a UV absorbing agent on the inside surface of at least one of the mold parts is performed by liquid phase deposition.

B1. The method according to item A, wherein the inside surface of at least one of the unsealed mold parts comprising a composition comprising a UV absorbing agent is obtained by depositing the composition comprising a UV absorbing agent on the inside surface of at least one of the unsealed mold parts.

C. The method according to item A-B1, wherein depositing the composition comprising a UV absorbing agent on the inside surface of at least one of the mold parts is performed by spin coating, spray coating, brush coating, dip coating, or roller coating.

D. The method according to item A-C, further comprising a drying step after depositing the composition comprising a

UV absorbing agent on the inside surface of at least one of the mold parts.

E. The method according to item A-D, wherein curing of the mold assembly comprises a UV curing step.

E1. The method according to item A-E, wherein curing of the mold assembly is carried out so as to position both mold parts under direct exposure of a curing source.

E2. The method according to item A-E1, wherein curing of the mold assembly is carried out so as to position only one mold part under direct exposure of a curing source.

E3. The method according to item A-E2, wherein curing of the mold assembly is carried out so as to position only the mold part that is devoid of the composition comprising a UV absorbing agent under direct exposure of a curing source.

E4. The method according to item A-E3, further comprising a thermal curing step, the thermal curing of the mold assembly is carried out so as to position only one mold part or both mold parts under direct exposure of a thermal curing source.

F. The method according to item A-E4, wherein depositing of the composition comprising a UV absorbing agent is carried out on the inside surface of only one of the mold parts and wherein the filling of the polymerizable composition in the molding cavity is carried out via a filling nozzle directed towards the opposite inside surface of the other mold part that is devoid of the composition comprising a UV absorbing agent so that the polymerizable composition flows along the inside surface of said other mold part.

G. The method according to item A-F, wherein the filling nozzle and the inside surface of the other mold part that is devoid of the composition comprising a UV absorbing agent are positioned relative to one another to form an angle between 20° to 45° so that the polymerizable composition flows along the inside surface of said other mold part.

H. The method according to item A-G, wherein the UV absorbing agent is chosen from a triazole, a triazine, a benzophenone, a benzylidene malonate, a cyanoacrylate, a malononitrile, an oxazole, an oxazolone, a barbituric acid derivative, a Meldrum's acid derivative, a thiazole, a metal oxide, a metal dioxide, a salicylate ester, a cinnamate ester, a p-aminobenzoate derivative, or combinations thereof.

I. The method according to item A-H, wherein the composition comprises a UV absorbing agent further comprises a volatile solvent.

J. The method according to item A-I, wherein the polymerizable composition is chosen from a mixture of one or more polyisocyanate(s) with one or more polythiol(s) or polyol(s).

K. The method according to item A-J, wherein the polymeric cast substrate has a yellowness index lower than 10, in particular lower than 5.

L. The method according to item A-K, wherein the polymeric cast substrate has a UV cut between 300 nm and 400 nm, preferably between 350 nm and 400 nm, more preferably between 370 nm and 400 nm.

M. An optical article comprising a polymeric cast substrate obtained from the curing of a mixture of one or more polyisocyanate(s) with one or more polythiol(s) or polyol(s), the thickness of the substrate being defined by the distance between a front surface and a rear surface, wherein the polymeric cast substrate comprises a gradient of concentration of a UV absorbing agent from the front surface to the rear surface along said thickness of the substrate.

M1. An optical article according to item M, wherein the polymeric cast substrate is obtained according to the method of item A-L.

M2. The optical article according to item M-M1, wherein the polymeric cast substrate comprises an increasing gradient of concentration of a UV absorbing agent from the front surface to the rear surface along said thickness of the substrate.

M3. The optical article according to item M-M1, wherein the polymeric cast substrate comprises a decreasing gradient of concentration of a UV absorbing agent from the front surface to the rear surface along said thickness of the

substrate.

N. The optical article according to item M-M3, wherein the substrate comprises a gradient of the polymerization degree of the polyisocyanate from the front surface to the rear surface along said thickness of the substrate.

N1. The optical article according to item M-N, wherein the substrate comprises an increasing gradient of the polymerization degree of the polyisocyanate from the front surface to the rear surface along said thickness of the substrate.

N2. The optical article according to item M-N1, wherein the substrate comprises a decreasing gradient of the polymerization degree of the polyisocyanate from the front surface to the rear surface along said thickness of the substrate.

O. The optical article according to item M-N2, wherein the polymeric cast substrate has a UV cut between 300 nm and 400 nm, preferably between 350 nm and 400 nm, more preferably between 370 nm and 400 nm.

P. The optical article according to item M-P, wherein the polymeric cast substrate has a color evolution (ΔE) of less than 3, preferably less than 1, more preferably less than 0.5 using a light power of 0.68 W/m2 for 80 hours.

Q. The optical article according to item M-P, wherein the optical article is a lens.

R. An eyewear comprising an optical article according to item M-P or a polymeric cast substrate manufactured by the method of item A-L.

This summary does not list all necessary characteristics, and therefore, sub-combinations of these characteristics may also constitute an invention. More details relating to the various embodiments of the invention will be further described in the detailed description.

## BRIEF DESCRIPTION OF DRAWINGS

The advantages, nature, and various additional features of the invention will appear more apparent upon consideration of the illustrative embodiments now to be described in detail in connection with accompanying drawings.
For a more complete understanding of the description provided herein and the advantages thereof, reference is now made to the brief descriptions below, taken in connection with the accompanying drawings and detailed description, wherein like reference numerals represent like parts.

Figure 1 illustrates a representative mold assembly that can be used in the process of manufacturing of the invention.

Figure 2 illustrates a representative step of filling the polymerizable composition in the cavity of the mold assembly.

Figure 3 is a diagram showing the yellowness index depending on the UV cut for several lenses containing 3 different illustrative UV absorbing agents.

## DETAILED DESCRIPTION

The words or terms used herein have their plain, ordinary meaning in the field of this disclosure, except to the extent explicitly and clearly defined in this disclosure or unless the specific context otherwise necessitates a different meaning. If there is any conflict in the usages of a word or term in this disclosure and one or more patent(s) or other documents that may be incorporated by reference, the definitions that are consistent with this specification should be adopted.
Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.
The words "comprising," "containing," "including," "having," and all grammatical variations thereof are intended to have an open, non-limiting meaning. For example, a composition comprising a component does not exclude it from having additional components, an apparatus comprising a part does not exclude it from having additional parts, and a method having a step does not exclude it having additional steps. When such terms are used, the compositions,

apparatuses, and methods that "consist essentially of" or "consist of" the specified components, parts, and steps are specifically included and disclosed. As used herein, the words "consisting essentially of," and all grammatical variations thereof are intended to limit the scope of a claim to the specified materials or steps and those that do not materially affect the basic and novel characteristic(s) of the claimed invention.

The indefinite articles "a" or "an" mean one or more than one of the component, part, or step that the article introduces.

Whenever a numerical range of degree or measurement with a lower limit and an upper limit is disclosed, any number and any range falling within the range is also intended to be specifically disclosed. For example, every range of values (in the form "from a to b," or "from about a to about b," or "from about a to b," "from approximately a to b," and any similar expressions, where "a" and "b" represent numerical values of degree or measurement) is to be understood to set forth every number and range encompassed within the broader range of values, and including the values "a" and "b" themselves.

Terms such as "first," "second," "third," etc. may be assigned arbitrarily and are merely intended to differentiate between two or more components, parts, or steps that are otherwise similar or corresponding in nature, structure, function, or action. For example, the words "first" and "second" serve no other purpose and are not part of the name or description of the following name or descriptive terms. The mere use of the term "first" does not require that there be any "second" similar or corresponding component, part, or step. Similarly, the mere use of the word "second" does not require that there be any "first" or "third" similar or corresponding component, part, or step. Further, it is to be understood that the mere use of the term "first" does not require that the element or step be the very first in any sequence, but merely that it is at least one of the elements or steps. Similarly, the mere use of the terms "first" and "second" does not necessarily require any sequence. Accordingly, the mere use of such terms does not exclude intervening elements or steps between the "first" and "second" elements or steps, etc.

As used herein, polymerization/polymerizing/polymerizable refers to a chemical reaction that produces bonding of two or more monomers and/or oligomers to form a polymer. Photo-polymerizable means polymerization which occurs by exposing a composition to activating light. Thermo-polymerizable means polymerization which occurs by exposing the composition to a variation of temperature.

As used herein, "curing" refers to a chemical process of converting a monomer or an oligomer into a polymer of higher molar mass and then into a network.

As used herein, "monomer" and/or "oligomer" refer to a chemical compound comprising at least a reactive group able to react in the presence of an initiator or a catalyst. As used herein, the term "reactive group" means a functional group of a composition that is capable of chemically reacting with a functional group of the same composition or a different composition to form a covalent linkage. The functional groups can be the same or different.

As used herein a "catalyst" means a substance that initiates or facilitates a chemical reaction; a substance that boosts the kinetics of a given reaction.

As used herein, an "initiator" represents a photoinitiator or a thermal initiator.

As used herein, a "photoinitiator" refers to a molecule that generates at least one reactive initiating species (ionic or radical) upon exposure to light and initiates a chemical reaction or transformation. A photoinitiator may be used alone or in combination with one or more compounds, such as co-initiators. The choice of photoinitiator is based firstly on the nature of reactive group(s) of monomer or pre-polymers used in the composition and also on the kinetics of the polymerization reaction. Photoinitiators can also include free radical initiators. It is well-known that a cationic curable composition cures more slowly than free-radically curable compositions.

A photoinitiator is a molecule that undergoes a photoreaction on absorption of light, producing reactive species, such as a cation or a free radical, whereas a UV absorbing agent does not undergo a photoreaction upon absorption of light. A UV absorbing agent is a compound that can absorb the energy of light and release this energy in the form of heat. Photoinitiators are capable of initiating or catalyzing chemical reactions that result in significant changes in the solubility and physical properties of suitable formulations. Hence, a photoinitiator is a compound that can transform the physical energy of light into suitable chemical energy in the form of reactive intermediates.

As used herein, a "thermal initiator" represents a species capable of efficiently inducing or causing polymerization or crosslinking by exposure to heat. Thermal initiators can be, but are not limited to, organic peroxides, inorganic peroxides, or azo initiators. Organic peroxides can include, but are not limited to, peroxycarbonates, peroxyesters, dialkylperoxides, diacylperoxide, diperoxyketals, ketoneperoxides and hydroperoxides. Inorganic peroxide thermal initiators can include, but are not limited to ammoniumpersulfate, potassiumpersulfate, and sodiumpersulfate.

As used herein, a "co-initiator" represents a molecule as part of a chemical system which does not absorb light but, nevertheless, participates in the production of the reactive species

As used herein, "thermoplastic" polymer is understood to be a thermoplastic resin that can melt when exposed to heat, and preferably is optically clear and of optical grade.

As used herein, "viscosity" refers to a fluid's resistance to deformation.

As defined herein, "homogeneity" refers to the absence in a bulk lens material, of any variation of refractive index

of the material that could induce noticeable scattering, haze, diffraction, distortion, and/or striation in the visible spectral range.

As used herein, haze is the percentage of transmitted light that, in passing through a specimen, deviates from the incident beam by forward scattering. Only light flux deviating more than 2.5°, on average, is considered to be haze. In other words, haze is a measure of intensity of the transmitted light that is scattered more than 2.5°. It can appear milky or smoky, when looking through a specimen. As haze increases, loss of contrast occurs until the object cannot be seen. Usually, an ophthalmic lens could present a haze level less than 1%.

As used herein, a substrate should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more coatings or layers.

As used herein, when an article comprises one or more layer(s) or coating(s) on the surface thereof, "depositing a layer or a coating onto the article" means that a layer or a coating is deposited onto the uncovered (exposed) surface of the article external coating, that is to say the coating that is the most distant from the substrate.

The rear surface of the substrate is the surface which, in use, may constitute the concave surface. The front surface of the lens substrate is the surface of the substrate which, in use, may constitute the convex surface.

As used herein, the term "optical article" refers to items designed to interact with light, for instance to support vision or perform optical functions.

As used herein, the term "eyewear" refers to items and accessories worn on or over the eyes. It encompasses vision-related items designed to enhance, protect, or augment the user's visual experience.

In case of eyewear, the rear surface (generally the concave surface) of the eyewear is the surface which, in use, is the closest to the wearer's eye. The front surface (generally the convex surface) of the eyewear is the surface which, in use, is the farthest from the wearer's eye.

The process comprises a step of providing a casting mold assembly containing two unsealed mold parts, typically made of mineral glasses.

According to an embodiment, the molding cavity has a curved shape in order to obtain a final substrate having a concave surface and a convex surface. Therefore, the inside surfaces (2b, 3b) of the two mold parts (2, 3) of the casting mold assembly 1 are each curved, one showing a convex surface and the other a concave surface and are situated opposite to each other within the casting mold assembly 1. Thus, the inside surfaces of the mold parts constituting the casting assembly corresponds to the surfaces forming the molding cavity. The mold part showing an inside convex surface will be referred to as the convex mold part and the mold part showing an inside concave surface will be referred to as the concave mold part.

Figure 1 illustrates a schematic view of the casting mold assembly 1.

The casting mold assembly 1 containing two unsealed mold parts (2, 3) each having an inside surface (2b, 3b) and an outside surface (2a, 3a) serve as a template for the final shape of the substrate. The molding cavity thus defines its final shape.

## Composition comprising the UV absorbing agent

The casting mold assembly in its unsealed configuration is preferably cleaned by a standard washing process to remove dust and some impurities prior to depositing the composition comprising the UV absorbing agent and pouring the polymerizable composition.

The UV absorbing agent may be chosen from compounds that are not reactive in the presence of the polymerizable composition. For example, the UV absorbing agent may be chosen from a triazole, a triazine, a benzophenone, a benzylidene malonate, a cyanoacrylate, a malononitrile, an oxazole, an oxazolone, a barbituric acid derivative, a Meldrum's acid derivative, a thiazole, a metal oxide, a metal dioxide, a salicylate ester, a cinnamate ester, a p-aminobenzoate derivative, or combinations thereof.

In particular, the UV absorbing agent may be chosen from a malononitrile or a malononitrile derivative such as those cited in WO2024/223878.

In particular, usual UV absorbing agents such as those commercialized under the tradenames UV 5411(R), UV 9(R), Tinuvin400(R), Tinuvin P(R), Tinuvin 312(R), and Seesorb 707(R) may be used in amounts generally up to 2% by weight of the total polymerizable monomers weight.

Particularly useful UV absorbing agents include but are not limited to a sebacate ester, a dibenzoylmethane, a camphor derivative, 2-(2H-Benzotriazol-2-yl)-4,6-bis(1- methyl-1-phenylethyl)phenol, 2-tert-Butyl-6-(5-chloro-2H- benzotriazol-2-yl)-4-methylphenol, 2-(2H-benzotriazole-2-yl)-4,6-di-tert- pentrylphenol, β-[3-(2H-benzotriazole-2-yl)-4-hydroxy-5-tert-butylphenyl]-propionic acid polyethylene glycol) 300-ester, bis{ β-[3-(2H-benzotriazole-2-yl)-4-hydroxy-5-tert-butylphenyl]-propionic acid}-poly(ethylene glycol) 300-ester (the mixture of the two preceding compounds is sold by

CIBA as TINUVIN 1130), zinc oxide, titanium dioxide, para-amino benzoic acid, octyl methoxycinnamate, benzophenone, 2-hydroxy-4-(octyloxy) benzophenone, 2,4-dihydroxy benzophenone, 2,2',4,4'-tetrahydroxy benzophenone, 2-hydroxy-4-methoxy benzophenone, 2-hydroxy-4-methoxybenzophenone-5-sulfonic acid, 2,2'-dihydroxy-4,4'-dimethoxy benzophenone, disodium-2,2'-dihydroxy-4,4'-dimethoxy-5,5'-disulfobenzophenone, 2-(2-hydroxy-5-methyl-phenyl) benzotriazole, 2-(2-hydroxy-3-tertbutyl-5-methylphenyl)-5-chlorobenzotriazole, dibutylhydroxyphenyl chlorobenzotriazole, 2-(2H-hydroxy-3-5-di-tert-amyllphenyl) benzotriazole, 2-(2-hydroxy-5-tertoctylphenyl) benzotriazole, 2,2'-methylene-bis(6-(benzotriazol-2-yl)-4-tert-octylphenol), 3-(2H-benzotriazolyl)-5-(1,1-di-methylethyl)-4-hydroxy-benzenepropanoic acid octyl ester, bis(2,2,6,6-tetramethyl-4-piperidine) sebacate, bis(1,2,2,6,6-pentamethyl-4-piperidinyl) sebacate, bis(2,2,6,6-tetramethyl-4-piperidine) sebacate, butanedioic acid dimethylester polymer with 4-hydroxy-2,2,6,6-tetramethyl-1-piperidine ethanol, poly { [ 6-[ (1,1,3,3-tetramethylbutyl) amino]-1,3,5-triazine-2,4-diyl] [(2,2,6,6-tetramethyl-4-piperidinyl) imino]-1,6-hexanediyl[(2,2,6,6-tetramethyl-4-piperidinyl) imino]}, bis(1,2,2,6,6-pentamethyl-4-piperidinyl)-[[3,5-bis (1,1-dimethyethyl-4-hydroxyphenyl]methy] butylmalonate, 1,3,5-triazine-2,4,6-triamine, 2-(4,6-diphenyl-1,3,5-triazin-2-yl)-5-hexyloxy-phenol, and 2-(4,6-Bis(2,4-dimethyl-phenyl)-1,3,5-triazine-2-yl)-5-octyloxy phenol, or a combination thereof.

According to an embodiment, the UV absorbing agents include but are not limited to isooctyl-3-(3-(2H-benzotriazol-2-yl)-5-t-butyl-4-hydroxy-phenylpropionate (Tinuvin<®>384), 2-[2-hydroxy-3-(dimethylbenzyl)-5-(1,1,3,3-tetramethylbutyl) phenyl]-2H-benzotriazole (Tinuvin<®>928), 2-[2-hydroxy-3,5-bis (dimethylbenzyl) phenyl]-2H-benzotriazole (Tinuvin<®>234) and 2-(2-hydroxy-3,5-di-tert-butylphenyl)-5-chlorobenzotriazole (Tinuvin<®>327), polyethylene glycol monoesters and diesters of 3-[5-(2-benzotriazoyl)-3-t-butyl-4-hydroxyphenyl] propionic acid (UVC2), 2-(2-hydroxy-3-t-butyl-5-methylphenyl)-chlorobenzotriazole (Seesorb<®>703), Tinuvin Carboprotect<®>, 2-(3,5-di-t-amyl-2-hydroxyphenyl) benzotriazole and 2-(2-hydroxy-5-t-octylphenyl) benzotriazole, or a combination thereof.

According to an embodiment, the UV absorbing agents include but are not limited to those of formula (I):

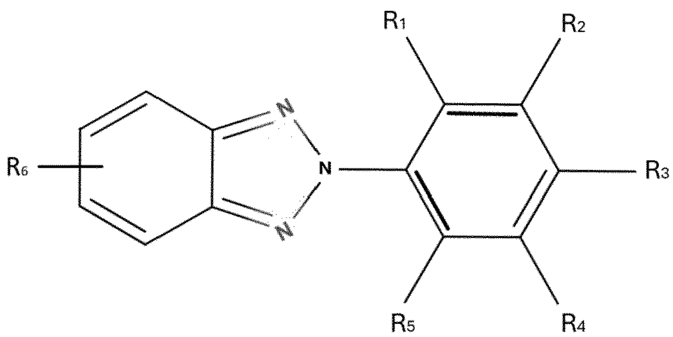

(I)

wherein,

R1 is chosen from hydrogen or hydroxy;

R2 is chosen from hydrogen or a linear or branched, substituted or unsubstituted alkyl or aryl group,

preferably a C1 to C7 alkyl being optionally substituted by one or several groups chosen from C1 to C7

alkyl or aryl, said aryl being optionally substituted by one or several groups chosen from aryl, C1 to C7

alkyl, halogen, hydroxy, amino;

R3 is chosen from hydrogen;

R4 is chosen from hydrogen or a linear or branched, substituted or unsubstituted alkyl, aryl group, -

alkylene-aryl group, ester group (-COOR) or alkoxy group (-COR), preferably a C1 to C7 alkyl, a C1 to C7 alkoxy, - C1-C7 alkylene-, C1-C7 aryl group, or -COOC1-C7 alkyl;

R5 is chosen from hydrogen;

R6 is chosen from hydrogen or a resonant group, i.e., a group providing resonance to the structure,

which is preferably selected from halogen, cyano, amino, hydroxyl, mercapto, carboxy, alkoxy, aryloxy, alkylsulfanyl and arylsulfanyl.

As used herein, the term alkyl covers n-alkyl and iso-alkyl.

According to an embodiment, the UV absorbing agents include but are not limited to :

| Family | Chemical name | Structure |
|---|---|---|
| Hydroxyphenyl triazine | Mixture of: 2-[4-[(2-Hydroxy-3-dodecyloxypropyl)oxy]-2-hydroxyphenyl]-4,6-bis(2,4-dimethylphenyl)-1,3,5-triazine & 2-[4-[(2-Hydroxy-3-tridecyloxypropyl)oxy]-2-hydroxyphenyl]-4,6-bis(2,4-dimethylphenyl)-1,3,5-triazine (sold as Tinuvin 400) | 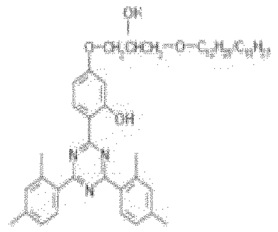 |
| Hydroxyphenyl triazine | Hydroxy-phenyl-s-triazine UV absorber with 18-20% 2-methoxy-1-propyl-acetate (sold as Tinuvin 477) | 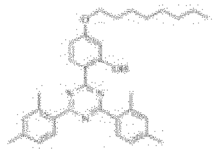 |
| Benzylidene malonate | Dimethyl (p-methoxybenzylidene) malonate (sold as Hostavin PR25) | 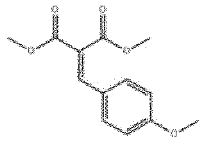 |
| Benzylidene malonate | 2-methoxycarbonyl-3-(3-ethoxy-4-hydroxyphenyl)acrylic acid methylester (sold as Semasorb 20108) | 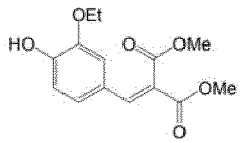 |
| Benzophenone | 2,2',4,4'-Tetrahydroxybenzo-phenone (sold as Eversorb 51) | 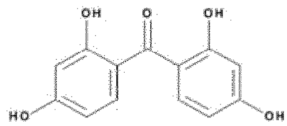 |
| Benzophenone | 2,2'-dihydroxy-4,4'-dimethoxybenzophenone (sold as Seesorb 107) | 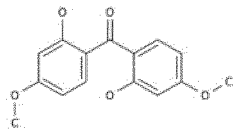 |
| Cyanoacrylate | 2-Propenoic acid, 2-cyano-3,3-diphenyl-, 2,2-bis[[(2-cyano-1-oxo-3,3-diphenyl-2-propenyl)oxy]methyl]-1,3-propanediyl ester (sold as Uvinul 3030) | 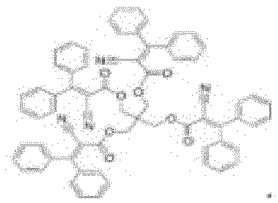 |
| Malononitrile | 2-((1-methyl-1H-pyrrol-2-yl)methylene)malononitrile (sold as ESS-33-C1) | 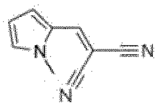 |
| Malononitrile | 2-((1-(2-ethylhexyl)-1H-pyrrol-2-yl)methylene)malononitrile (sold as ESS-33-M) | 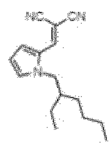 |

(continued)

| Family | Chemical name | Structure |
|---|---|---|
| Malononitrile | 2-((1H-pyrrol-2-yl)methylene)malononitrile (sold as ESS-33-C) | 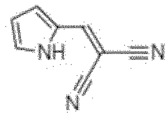 |
| Oxazolone | 4-Benzylidene-2-phenyl-2-oxazolin-5-one (sold as H-Oxa) | 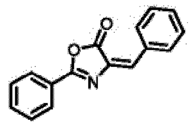 |
| Barbituric Acid derivatives | 5-((1H-imidazol-5-yl)methylene)-1,3-dimethylpyrimidine-2,4,6(1H,3H,5H)-trione (sold as ESS-27-E) | 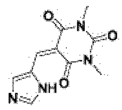 ESS-27-E |
| Meldrum's Acid derivatives | 1,3-Dioxane-4,6-dione, 5-[(4-hydroxyphenyl) methylene]-2,2-dimethyl-1,3-dioxane-4,6-dione (ESS-13-G) | 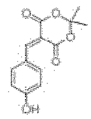 |

The composition comprising the UV absorbing agent may further comprise a solvent, preferably a volatile solvent.

A volatile solvent is a liquid that evaporates quickly. The term "volatile" means that the solvent has a measurable vapor pressure, or a vapor pressure of at least 2 mm. of mercury at 20 °C. Examples of volatile solvents may be : tetrahydrofuran, diethyl ether, dimethyl ether (DME), methyltetrahydrofuran (MeTHF), acetonitrile, dimethyl sulfoxide (DMSO), dimethylformamide (DMF), ethyl acetate (EtOAc), ethanol (EtOH), methanol (MeOH), dichloromethane, isopropyl alcohol (IPA)

For example, the composition may have a molar concentration of UV absorbing agent of formula I from 0.01 to 1 mol/L prepared in tetrahydrofuran.

The composition comprising a UV absorbing agent may be deposited on the inside surfaces (2b, 3b), preferably on the inside surface of the concave mold part. The composition comprising the UV absorbing agent may be thus deposited on the inside surface 2b of the mold part 2 of the casting mold assembly 1 that would later form the front surface of the substrate.

The deposition may be carried out at room temperature, at 20°C, or the mold onto which the deposition will be carried out may be pre-heated to a temperature comprised between 50 and 100 °C prior to the deposition of the composition comprising the UV absorbing agent.

The deposition of the composition comprising the UV absorbing agent may be performed by liquid phase deposition. According to an embodiment, depositing the composition may be performed by spin coating, spray coating, brush coating, dip coating, or roller coating.

Spraying may be preferred as it has the ability to provide uniform coverage and consistent thickness, which minimizes streaks and uneven application. It is highly efficient, covering areas more quickly than brushing or rolling, while producing a smooth finish without brush or roller marks.

After the composition comprising the UV absorbing agent is applied, the mold part may be dried at room temperature for at least 30 minutes, preferably for at least an hour, preferably less than 2 hours, to ensure that the solvent was entirely evaporated.

## Mold assembly

The convex and concave mold parts may be assembled with their respective concave and convex inside surface positioned opposite to one another. According to an embodiment, in order to obtain the casting mold assembly in the closed mode, the mold assembly may comprise at the periphery thereof a closure member, such as a gasket or an adhesive tape (of about 2mm), defining with them the required molding cavity.

According to an embodiment, the polymerized composition is self-supporting in the mold assembly when the annular closure of the two part mold assembly has been removed.

## Polymerizable composition

As used herein, "photopolymerizable composition" and "polymerizable composition" are used interchangeably.

According to an embodiment, the polymerizable composition is devoid of UV absorbing agents prior to being filled in the molding cavity.

In some embodiments, the polymerizable composition may comprise a mixture of one or more polyisocyanate(s) with one or more polythiol(s) or polyol(s).

In some embodiments, the polymeric cast substrate may be a polythiourethane.

In some embodiments, the polymeric cast substrate may be a polyurethane.

In some embodiments, the polythiol may be a dithiol or a trithiol or a tetratriol.

In some embodiments, the polyisocyanate may be an aromatic or a non-aromatic polyisocyanate.

As used herein, a thiourethane polymer may typically be from the mixture of one or more e.g. two diisocyanate monomers or oligomers with one or more polythiol monomers or oligomers or one or more monomers or oligomers having an epithio function (epithio compound). Polythiourethane are cross-linked polymers obtained from monomers or oligomers comprising a polyisocyanate monomer or oligomer, for example an aromatic polyisocyanate monomer or oligomer, and a polythiol monomer or oligomer, or a monomer or oligomer having an epithio function.

A monomer or oligomer having epithio function may be selected from bis(2,3-epithiopropyl)sulfide, bis(2,3-epithiopropyl)disulfide and bis[4-(beta epithiopropylthio)phenyl]sulfide, bis[4-(beta -epithiopropyloxy)cyclohexyl]sulfide.

As used herein, a polyurethane polymer may typically be from the mixture of one or more e.g. two diisocyanate monomers or oligomers with one or more polyol monomers or oligomers.

The skilled person may formulate the polymerizable composition with specific ratios or concentrations of the polythiol and polyisocyanate or polyisothiocyanate components according to his/her needs. For example, the amounts of polyisocyanate or polyisothiocyanate monomers or oligomers and polythiol monomers or oligomers may be adapted so that the ratio NCX/SH for the mixture of polyisocyanate or isothiocyanate monomers or oligomers and polythiol monomers or oligomers may range from 4:1 to 30:1 or the ratio SH/NCX for the mixture of polyisocyanate or isothiocyanate monomers or oligomers and the polythiol monomers or oligomers may range from 4:1 to 30:1.

For example, said monomers or oligomers may comprise a diisocyanate and a trithiol. For example, the polythiourethane may be a polythiourethane with a refractive index of greater than 1.50, in particular of from 1.55 to 1.8, more particularly of 1.6 to 1.7. In some embodiments the polythiol may be 2,3-bis((2-mercaptoethyl)thio)-1-propanethiol.

The polythiol may have the formula R'(SH)n', in which n' is an integer from 2 to 6 and preferably 3 to 4, and R' is an organic group of valency equal to n'.

Useful polythiol monomers are those disclosed in EP-A-394.495 and U.S. Pat. No. 4,775,733 and the polythiols corresponding to the following formulas:

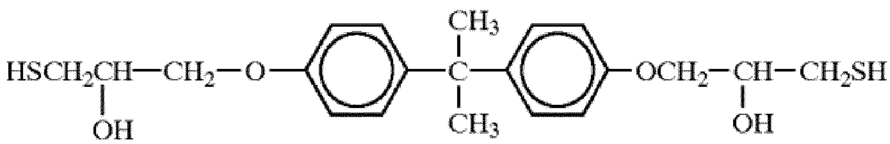

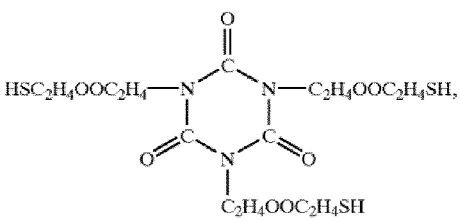

, and

$C_2H_5C(CH_2COOCH_2CH_2SH)_3$

The polythiol may be selected from the group consisting of pentaerythritol tetrakis mercaptoproprionate, 1-(1'mercaptoethylthio)-2,3-dimercaptopropane, 1-(2'-mercaptopropylthio)-2,3-dimercaptopropane, 1-(-3'mercaptopropylthio)-2,3 dimercaptopropane, 1-(-4'mercaptobutylthio)-2,3 dimercaptopropane, 1-(5'mercaptopentylthio)-2,3 dimercapto-propane, 1-(6'-mercaptohexylthio)-2,3-dimercaptopropane, 1,2-bis(-4'-mercaptobutylthio)-3-mercaptopropane, 1,2-bis(-5'mercaptopentylthio)-3-mercaptopropane, 1,2-bis(-6'-mercaptohexyl)-3-mercaptopropane, 1,2,3-tris(mercaptomethylthio)propane, 1,2,3-tris(-3'-mercaptopropylthio)propane, 1,2,3-tris(-2'-mercaptoethylthio)propane, 1,2,3-tris(-4'-mercaptobutylthio) propane, 1,2,3-tris(-6'-mercaptohexylthio)propane, methanedithiol), 1,2-ethanedithiol, 1,1-propanedithiol, 1,2-propanedithiol, 1,3-propanedithiol, 2,2-propanedithiol, 1,6-hexanethiol-1,2,3-propanetrithiol, and

1,2-bis(-2'-mercaptoethylthio)-3-mercaptopropane or a mixture thereof.

The polyisocyanate or isothiocyanate may be selected from the group consisting of tolylene diisocyanate or diisothiocyanate, phenylene, diisocyanate or diisothiocyanate, ethylphenylene diisocyanate, isopropyl phenylene diisocyanate or diisothiocyanate, dimethylphenylene diisocyanate or diisothiocyanate, diethylphenylene diisocyanate or diisothiocyanate, diisopropylphenylene diisocyanate or diisothiocyanate, trimethylbenzyl triisocyanate or triisothiocyanate, xylylene diisocyanate or diisothiocyanate, benzyl triiso(thio)cyanate, 4,4'-diphenyl methane diisocyanate or diisothiocyanate, naphtalene diisocyanate or diisothiocyanate, isophorone diisocyanate or diisothiocyanate, bis(isocyanate or isothiocyanate methyl) cyclohexane, hexamethylene diisocyanate or diisothiocyanate and dicyclohexylmethane diisocyanate or diisothiocyanate or a mixture thereof.

In some embodiments, the polymerizable composition may comprise a mixture of m-xylylene diisocyanate and pentaerythritol tetrakis mercaptopropionate or a mixture of m-xylylenediisocyanate and bis (mercaptoethyl) trithioglycerin.

In some embodiments, the polymerizable composition may comprise 2,3-bis((2-mercaptoethyl)thio)-1-propanethiol and m-xylylene diisocyanate.

According to an embodiment, the polyisocyanate or polyisothiocyanate is selected from monomers of formulas:

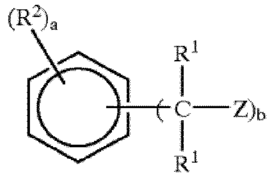

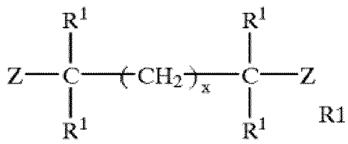

R1

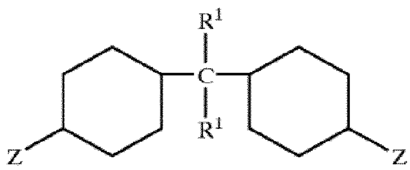

and

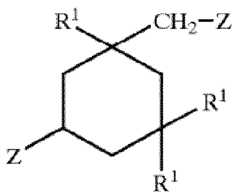

wherein

- R1 is independently H or a C1-C5 alkyl group, preferably CH3 or C2H5;
- R2 is H, an halogen, preferably Cl or Br, or a C1-C5 alkyl group, preferably CH3 or C2H5;
- Z is -N=C=X where X is O or S;
- a is an integer ranging from 1 to 4, b is an integer ranging from 2 to 4 and a+b≤6 and x is an integer from 1 to 10, preferably 1 to 6.

According to an embodiment, the composition comprising one or more polymerizable episulfide compounds having two or more moieties of formula:

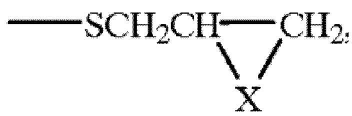

wherein X is S or O.

The polymerizable composition, also called bulk composition or bulk formulation, may further contain additives commonly used in the art, for example internal mold release agents, resin modifiers, chain extenders, crosslinking agents, free radical scavengers such as antioxidants, diluents, stabilizers, tackifiers, thickeners, thinners, fillers, antiozonants, dyes, perfumes, fragrances, deodorants, antioxidants, anti-yellowing agents, binders, plasticizers, photochromic materials, pigments, nucleating agents, thixotropic agents and adhesion accelerators. The perfumes allow the odour of the compositions to be masked, in particular during surfacing or routering operations.

Also, the compositions of the disclosure may comprise a release agent in an amount up to 0.1% by weight of the total polymerizable monomers/prepolymers weight.

Among the release agents there may be cited mono and dialkyl phosphates, silicones, fluorinated hydrocarbon, fatty acids and ammonium salts. The preferred release agents are mono and dialkyl phosphates and mixtures thereof. Such release agents are described interalia in document U.S. Pat. No. 4,662,376, U.S. Pat. No. 4,975,328 and EP-271.839.

The polymerizable composition according to the invention generally comprises a system for initiating the polymerization (catalyst). The polymerization initiating system can comprise one or more photochemical polymerization initiating agents or alternatively, a mixture of thermal and photochemical polymerization initiating agents, depending on the nature of the polymerizable compounds. Generally, the initiating agents are used in a proportion of 0.01 to 5% by weight with respect to the total weight of polymerizable compounds present in the composition.

In particular, for substrates resulting from polymerization or (co)polymerization of polyurethane and polythiourethane resins, preferred catalysts or initiators are selected from alkyltins, alkyltin oxides, metal coordination complexes or amines, more preferably alkyltins. A preferred proportion for alkyltins is 0.02 to 2% by weight with respect to the total weight of polymerizable compounds present in the composition.

The polymerizable composition may comprise at least a catalyst and/or a photoinitiator added in the bulk.

The polymerizable composition may comprise at least a bulk catalyst, the catalyst being chosen in particular from nitrogen containing compounds such as primary, secondary or tertiary amines, such as triethylamine or 3,5-lutidine, guanidines, amidines, nitrogen containing heterocycles such as imidazoles, salts of nitrogen containing compounds such as borates or carboxylates of above nitrogen containing compounds, organometallic salts based on bismuth, lead, tin, antimony, uranium, cadmium, cobalt, thorium, aluminum, mercury, zinc, nickel, cerium, molybdene, vanadium, copper, manganese or zirconium; phosphines, such as triphenylphosphine. organometallic compounds, such as dibutyltin dilaurate (DBTDL), dibutyltin dichloride (DBTDC), butyl chlorotin dihydroxide, butyltin tris (2-ethylhexoate), stannous octoate (tin 2-ethylhexanoate), dibutyltin diacetate, dibutyltin oxide, dimethyltin dichloride, dibutyltin distearate, dibutyltin mercaptide, tin octylate, triphenyltin acetate, triphenyltin hydroxide, butyl stannoic acid, dioctyltin dilaurate and dioctyltin maleate, potassium thiocyanate (KSCN), lithium thiocyanate (in the presence of crown ether), cobalt naphthenate, bismuth trineodecanoate, or mixtures thereof. The bulk catalyst may be selected from amine catalysts which may be chosen from aliphatic or aromatic tertiary amines preferably containing a supplemental heteroatom in the ring or functional groups having a positive inductive and/or positive mesomeric effect (for example, alkyl groups or amino groups). Examples include 1,4-diazabicyclo[2.2.2]octane (DABCO), triethylamine, quinuclidine, 2,2'-dimorpholinodiethylether, N,N-dimethylpiperazine, N,N-dimethylcyclohexylamine, 1-methylimidazole, 2-methyl-1-vinylimidazole, 1-allylimidazole, 1-phenylimidazole, 1,2,4,5-tetramethylimidazole, 1 (3-aminopropyl)imidazole, 4-dimethylaminopyridine, 4-pyrrolidino-pyridine, 4-morpholinopyridine, 4-methylpyridine, N-dodecyl-2-methylimidazole, triazines such as tris(dimethylaminopropyl) hexahydrotriazine, dimethylbenzylamine, bis-dimethylamino-ethylether and pentamethyl diethylenetriamine, 1,8-diazabicyclo [5.4.0] undec-7-ene (DBU), 1,5-diazabicyclo [4.3.0] non-5-ene (DBN) and 4-dimethylaminopyridine (DMAP).

In general, a photoinitiator for initiating the polymerization of the lens forming composition preferably exhibits an absorption spectrum over the 200-400 nm, more preferably 300-400 nm range. The following are examples of illustrative photoinitiator compounds : PBG14 (DABCO 2ATN/2BPh4) and compounds cited in EP23307368, mixtures of bis(2,6-dimethoxybenzoyl) (2,4,4-trimethyl phenyl)phosphine oxide and 2-hydroxy-2-methyl-1-phenyl-propan-1-one (commercially available from Ciba Additives under the trade name of Irgacure<®> 1700); mixtures of bis(2,6-dimethoxybenzoyl) (2,4,4 trimethyl phenyl)phosphine oxide and 1-hydroxycyclohexylphenyl ketone (commercially available from Ciba Additives under the trade names of Irgacure<®> 184 and Irgacure<®> 500 and Irgacure<®> 1800 and Irgacure<®> 1850); 2,2-dimethoxy-2-phenyl acetophenone (commercially available from Ciba Additives under the trade name of Irgacure<®> 651); 2-hydroxy-2-methyl-1-phenyl-propan-1-one (commercially available from Ciba Additives under the trade names of Darocur<®> 1173); mixtures of 2,4,6-trimethylbenzoyl-diphenylphoshine oxide and 2-hydroxy-2-methyl-1-phenyl-propan-1-one (commercially available from Ciba Additives under the trade name of Darocur<®> 4265); benzil dimethyl ketal (commercially available from Sartomer Company under the trade name of KB-1); an alpha hydroxy ketone initiator (commercially available from Sartomer company under the trade name of Esacure<®> KIP100F); 2-methyl thioxanthone (MTX), 2-chloro-thioxanthone (CTX), thioxanthone (TX), and xanthone, (all commercially available from Aldrich Chemical); 2-isopropyl-thioxanthone (ITX) (commercially available from Aceto Chemical in Flushing, N.Y.); mixtures of triaryl sulfonium hexafluoroantimonate and propylene carbonate (commercially available from Sartomer Company under the trade names of SarCat CD-1010, SarCat 1011, and SarCat KI85); diaryliodinium hexafluoroantimonate (commercially available from Sartomer Company under the trade name of SarCat CD-1012); mixtures of benzophenone; 2-benzyl-2-N,N-dimethylamino-1-(4-morpholinophenyl)-1-butanone (commercially available from Ciba Additives under the trade name of Irgacure<®> 369); 2-methyl-1-[4-(methylthio)phenyl]-2-morpholino-propan-1-one (commercially available from Ciba Additives under the trade name of Irgacure<®> 907); bis(η5-2,4-cyclopentadien-1-yl)bis-[2,6-difluoro-3-(1H-pyrrol-1-yl)phenyl]titanium (commercially available from Ciba Additives under the trade name of Irgacure<®> 784 DC); mixtures of 2,4,6-trimethyl-benzophenone and 4-methyl-benzophenone (commercially available from Sartomer Company under the trade name of Esacure<®> TZT); and benzoyl peroxide and methyl benzoyl formate (both commercially available from Aldrich Chemical in Milwaukee, Wis.), and as described in U.S. Patent No. 6,786,598 B2.

Examples of free radical initiators suitable for the present invention include, but are not limited to, benzophenone, methyl benzophenone, xanthones, acylphosphine oxide type such as 2,4,6,-trimethylbenzoyldiphenyl phosphine oxide, 2,4,6,-trimethylbenzoylethoxydiphenyl phosphine oxide, bisacylphosphine oxides (BAPO), benzoin and benzoin alkyl

ethers like benzoin methyl ether, benzoin isopropyl ether. Free radical photoinitiators can be selected also, for example, from haloalkylated aromatic ketones such as chloromethylbenzophenones; some benzoin ethers such as ethyl benzoin ether and isopropyl benzoin ether; dialkoxyacetophenones such as diethoxyacetophenone and α,,α,-dimethoxy-α-phenylacetophenone; hydroxy ketones such as (1-[4-(2-hydroxyethoxy)-phenyl]-2-hydroxy-2-methyl-1-propan- 1-one) (Irgacure° 2959 from CIBA), 1-hydroxy-cyclohexyl-phenyl-ketone (Irgacure<®> 184 from CIBA) and 2-hydroxy-2-methyl-1-phenylpropan-1-one (such as Darocur<®> 1173 sold by CIBA); alpha amino ketones, particularly those containing a benzoyl moiety, otherwise called alpha-amino acetophenones, for example 2-methyl 1-[4-phenyl]-2-morpholino-propan-1-one (Irgacure<®> 907 from CIBA), (2-benzyl-2-dimethyl amino-1-(4-morpholinophenyl)-butan-1-one (Irgacure<®> 369 from CIBA); monoacyl and bisacyl phosphine oxides and sulphides, such as phenylbis(2,4,6-trimethylbenzoyl)-phosphine oxide (Irgacure<®> 819 sold by CIBA); triacyl phosphine oxides; and mixtures thereof.

Cationic photoinitiators suitable for the methods described herein can comprise compounds which are able to form aprotic acids or Bronsteäd acids upon exposure to activating light like UV or visible light. Examples of suitable cationic photoinitiators include, but are not limited to: aryldiazonium salts, diaryliodonium salts, triarylsulfonium salts, or triarylselenium salts.

The polymerizable composition may further comprise a solvent, preferably polar solvents like methanol, ethanol, propanol, butanol, glycols, and glycol monoethers. These solvents can be used alone or in combination. Solvents suitable for liquid polymerizable compositions comprising polymers like thermoplastic polymers are also organic solvents, preferentially a polar solvent like toluene, benzene, cyclohexene, hexane, tetrahydrofuran, pentane, ketones, such as acetone and methylethyl ketone, and acetates, to name a few.

Examples of acceptable surfactants that can be used according to the disclosed methods can be ionic (cationic, anionic or amphoteric) or non ionic surfactants, preferably non ionic or anionic surfactants. However, a mixture of surfactants belonging to these various categories may be envisaged. Most of these surfactants are commercially available. In one exemplary embodiment, a surfactant can be used which comprises poly(oxyalkylene) groups. Suitable examples of non ionic surfactants for use in the present invention include poly(alkylenoxy)alkyl-ethers, especially poly(ethylenoxy)alkyl-ethers, marketed, for example, by the ICI company under the trade name BRIJ<®>, poly(alkylenoxy)alkylamines, poly(alkylenoxy)alkyl-amides, polyethoxylated, polypropoxylated or polyglycerolated fatty alcohols, polyethoxylated, polypropoxylated or polyglycerolated fatty alpha-diols, polyethoxylated, polypropoxylated or polyglycerolated fatty alkylphenols and polyethoxylated, polypropoxylated or polyglycerolated fatty acids, all having a fatty chain comprising, for example, from 8 to 18 carbon atoms, where the number of ethylene oxide or propylene oxide units may especially range from 2 to 50 and where the number of glycerol moieties may especially range from 2 to 30, ethoxylated acetylene diols, compounds of the block copolymer type comprising at the same time hydrophilic and hydrophobic blocks (for example polyoxyethylene and polyoxypropylene blocks, respectively), copolymers of poly(oxyethylene) and poly(dimethylsiloxane) and surfactants incorporating a sorbitan group.

In other embodiments anionic surfactants can be used, which comprise a sulfonic acid group, amongst which can be alkylsulfosuccinates, alkylethersulfosuccinates, alkylamidesulfosuccinates, alkylsulfosuccinamates, dibasic salts of polyoxyethylene alkyl sulfosuccinic acid, dibasic salts of alkyl sulfosuccinic acid, alkylsulfo-acetates, sulfosuccinic acid hemi-ester salts, alkylsulfates and aryl sulfates such as sodium dodecylbenzene sulfonate and sodium dodecylsulfate, ethoxylated fatty alcohol sulfates, alkylethersulfates, alkylamidoethersulfates, alkylarylpolyethersulfates, alkylsulfonates, alkylphosphates, alkyletherphosphates, alkylamidesulfonates, alkylarylsulfonates, α-olefin-sulfonates, secondary alcohol ethoxysulfates, polyoxyalkylated carboxylic acid ethers, monoglyceride sulfates, sulfuric acid polyoxyethylene alkylether salts, sulfuric acid ester salts, N-acyltaurates such as N-acylmethyltaurine salts, monosulfonic acid hydroxyalkanes salts or alkene monosulfonates, the alkyl or acyl radical of all these compounds comprising preferably from 12 to 20 carbon atoms and the optional oxyalkylene group of these compounds comprising preferably from 2 to 50 monomer units. These anionic surfactants and many others to be suitably used in the present application are described in EP 1418211 and U.S. Pat. No. 5,997,621.

Suitable examples of cationic surfactants for use in the present invention include primary, secondary or tertiary fatty amine salts, optionally polyoxyalkylenated, quaternary ammonium salts such as tetraalkylammonium, alkylamidoalkyltrialkylammonium, trialkylbenzylammonium, trialkylhydroxyalkyl-ammonium or alkylpyridinium chlorides or bromides, imidazoline derivatives or amine oxides of cationic nature.

In one embodiment, the surfactant used can comprise a fluorinated surfactant. In this case, those will be preferably used which comprise at least one fluoroalkyl or polyfluoroalkyl group and more preferably those which comprise at least one perfluoroalkyl group.

**Filling procedure**

The molding cavity may be filled with the polymerizable composition, said molding cavity of the casting mold assembly already containing the composition comprising a UV absorbing agent deposited on the inside surface of at least one of the molds.

Typically filling of the molding cavity is performed using a pipe connected to a polymerizable composition reservoir and applied, like a filling nozzle, to the casting opening with a filling nozzle, preferably a syringe. A filling nozzle, such as a syringe, can be used coupled to an electrical device or pneumatic device. By this way, exact amounts of the composition can be easily adjusted and fixed for precise delivery.

According to an embodiment, the casting mold assembly, in its closed mode, may be tilted in such a way so as to be oriented at an angle between 20° and 60° in relation to the vertical plan, as illustrated in Figure 2. In this configuration, the filling nozzle may be positioned so as to insert the polymerizable composition inside the molding cavity to flow on the internal surface of the mold part, preferably the convex mold part not containing the UV absorbing agent. Thus, controlling the filling step in this way and avoiding the polymerizable composition sliding on the inside surface of the mold part containing the UV absorbing agent, the risk that said UV absorbing agent be locally dissolved by the polymerizable composition would be mitigated. As a result, the appearance of cosmetic defects is minimized.

## Polymerization

The mold assembly may be placed in a UV oven equipped with 365 nm both top and bottom side irradiation for a duration from 1 to 15 minutes, preferably from 2 to 7 minutes, and at a UV intensity from 100 to 500 mW/cm2, preferably from 200 to 300 mW/cm2.

After the UV curing, a further thermal curing may be performed. According to an embodiment, the thermal curing may be performed at a temperature from 70°C to 200°C, preferably from 100°C to 150 °C and for a duration from 10 minutes to 3 hours, preferably from 30 minutes to 90 minutes, for example in an air oven. This additional step help improve the completion of the polymerization.

The UV curing, and, if present, the thermal curing, may be carried out so as to position both mold parts under direct exposure of a curing source.

According to an embodiment, the UV curing may be carried out so as to position only one mold parts under direct exposure of an UV curing source. If present, the thermal curing may be carried out so as to position only the same or the remaining mold part under direct exposure of a thermal curing source.

According to an embodiment, the UV curing, and, if present, the thermal curing, may be carried out so as to position only the mold part that is devoid of the composition comprising a UV absorbing agent under direct exposure of an UV curing source. If present, the thermal curing may be carried out so as to position only the same or the remaining mold part under direct exposure of a thermal curing source.

## Disassembly

Thereafter, the mold assembly is withdrawn and allowed to cool down to room temperature. The closure member is removed, and the mold parts disassembled to recover the substrate. The recovered substrate or article can then be edge machined to obtain a finished lens.

## Opticle article

According to an aspect, the disclosure relates to an optical article comprising a polymeric cast substrate manufactured by the method of the first aspect.

According to an aspect, the disclosure relates an ophthalmic lens comprising a polymeric cast substrate manufactured by the method of the first aspect.

The optical article, preferably a lens such as an ophthalmic lens, manufactured in accordance with an embodiment of the present disclosure, represents a lens selected from blank lens, semi-finished lens, finished lens, and lens adapted to see-trough "Head-Mounting Display" (HMD). By "Head mounting display" it is understood a device able to be mounted on the head of a wearer, and comprising an optical imager for shaping light beams coming from an electronic and optical system that generates light beams from an electronic signal, the system being of the miniature screen, laser diode, or light-emitting diode (LED) type; the optical imager directing light beams towards the eye of the wearer so as to enable an information content to be used.

Said optical article, preferably a lens such as an ophthalmic lens, may also represent a lens selected from a focal (or no-corrective, or plano), unifocal, bifocal, trifocal, and progressive lens, said optical article, preferably a lens, being able to be mounted either to traditional frame comprising two distinctive ophthalmic lenses, one for the right eye and one for the left eye, or to a mask, visor, helmet sight or goggle, wherein one lens facing simultaneously the right and the left eyes, and said lens may be produced with traditional geometry as a circle or may be produced to be fitted to the geometry to the frame intended. When said lens is dedicated to be mounted to a see-trough "HMD", said lens may be corrective or afocal, and may be placed on the front surface and/or on the rear surface of the optical imager of the HMD. When the lens is placed on the front surface and on the rear surface of the optical imager, it means that the optical imager is inserted inside said lens.

Optical articles, such as lenses, can furthermore be functionalized, in a further step after optionally post-treatment step, by adding at least a functional coating and/or a functional film. Functionalities may be added on one face or surface of the lens, or on the two faces of the lens, and on each face, functionalities may be identical or different. Among the functionality, it may be mentioned, as example and without any limitation, a functionality selected from anti-impact, anti-abrasion, anti-soiling, anti-static, anti-reflective, anti-fog, anti-rain, self-healing, polarization, tint, photochromic, selective wavelength filter which could be obtain through an absorption filter or reflective filter. Such selective wavelength filters are particularly interested to filter ultraviolet radiation, blue light radiation, or infra-red radiation for example.

The functionality may be added by at least one process selected from dip-coating, spin-coating, spray-coating, vacuum deposition, transfer process or lamination process. By transfer process it is understood that functionality is firstly deposited on a support like a carrier, and then is transferred from said carrier to said ophthalmic lens through an adhesive layer deposited between the two elements. Lamination is defined as obtaining a permanent contact between a film which comprises at least one functionality as mentioned hereinbefore and the surface of the ophthalmic lens to be treated, said permanent contact being obtained by the establishment of a contact between said film and said lens, followed optionally by a polymerization step or a heating step, in order to finalize the adhesion and adherence between the two entities. At the end of this lamination process the assembled film and the optical lens form one single entity. Usually to lamination process, glue is present in the interface of the film and the ophthalmic lens. An example thereof is detailed above in reference to the microstructured laminates added to one or both faces or surfaces of the ophthalmic lens.

According to an aspect, the disclosure relates to an eyewear comprising an optical article according to the preceding aspect, or comprising a polymeric cast substrate manufactured by the method of the first aspect. Eyewear may include lenses, ophthalmic lenses, reading glasses, sunglasses, goggles, diving masks, sport goggles, smart eyewear, augmented reality smart glasses, virtual reality headsets, wearable tech glasses, contact lenses such as corrective contact lenses, cosmetic contact lenses.

Although representative processes and articles have been described in detail herein, those skilled in the art will recognize that various substitutions and modifications may be made without departing from the scope of what is described and defined by the appended claims.

## EXAMPLES

### Mold assembly preparation

Firstly, the unsealed mold parts are cleaned by a standard washing process to remove dust and impurities. Then, one of the cleaned mold parts (the side shown by the flash in Figure 2 and Reference 2b in Figure 1) is sprayed at room temperature using a spray gun on inside surface with a solution containing a UV absorbing agent with molar concentration of 0.09 mol/L in tetrahydrofuran. After that, the mold part was removed to be dried at room temperature for more than 1 hour to ensure that the solvent was entirely evaporated.

### Polymerizable composition preparation

The polymerizable composition is prepared as shown hereafter.

| Function | Chemical | Content (%wt) | CAS NO. |
|---|---|---|---|
| Monomer | 2,5-bis-isocyanatomethyl-bicyclo[2.2.1]heptane MR8A | 50.6 | 74091-64-8 |
| Monomer | pentaerythritol tetrakis (3-mercaptopropionate) MR8B1 | 23.9 | 7575-23-7 |
| Monomer | 2,3-Bis((2-mercaptoethyl)thio)-1-propanethiol MR8B2 | 25.29 | 131538-00-6 |
| Photo catalyst | PBG14 (DABCO·2ATN/2BPh4) | 0.25 | N/A |
| Releasing agent | Zelec UN | 0.1 | N/A |

The PBG14's structure is as follows :

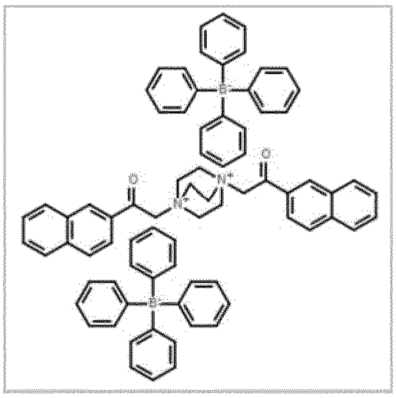

Filling procedure

The inside surfaces of the mold parts are arranged opposite to each other so that the inside surfaces of both mold parts form together the casting molding cavity. After, the casting mold assembly is secured using a taping assembly machine with a 2 mm-thick casting tape. The mold is tilted during the filing of the polymerizable composition. The polymerizable composition is provided via a syringe needle or filling nozzle to flow on the inside surface of the unsprayed mold part.

Polymerization

The mold assembly is placed in a UV oven equipped with 365 nm lamps both top and bottom side in order to undergo curing for 5 minutes at a UV intensity of 272 mW/cm$^2$, and then continue to cure in the thermal oven at 130 °C for 1 hour to complete the polymerization.

Disassembly

The mold assembly is removed from the thermal oven and allowed to cool down to room temperature, at around 20°C. Once cooled, the mold assembly is disassembled in order to retrieve the polymeric cast substrate, i.e. the lens.

Lens characterization

The resulting lenses were characterized as follows:

- the optical parameters, UV cut and YI, were measured using Cary60 spectrometer.
- defect was inspected using R17 lamp.
- shore surface hardness was tested using a durometer
- DMA was used to measure the thermo-mechanical properties.
- photo stability was tested using a Q-Sun oven.

Result and discussion

Yellowness index (YI) and UV Cut

Various UV absorbing agents were tested. Among them, the results of benzotriazole-based UV absorbing agents listed in table below are given. The resulting lenses were measured by Cary60 spectrometer to observe the lens cosmetic. The relationship between yellowness (YI) and UV cut was plotted as shown in Figure 3.

| Commercial name | Name | Chemical structure | CAS no. |
|---|---|---|---|
| Seesorb 703 | 2-tert-Butyl-6-(5-chloro-2H-benzotriazol-2-yl)-4-methylphenol | 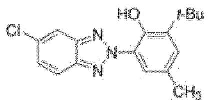 | 3896-11-5 |
| Eversorb 74 | 2-(2H-benzotriazole-2-yl)-4,6-di-tert-pentrylphenol | 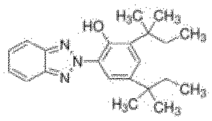 | 25973-55-1 |
| Chemsorb 234 | 2-(2H-Benzotriazol-2-yl)-4,6-bis(1- methyl-1-phenylethyl)phenol | 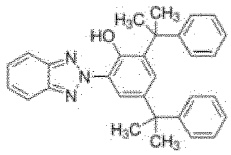 | 70321-86-71 |

At the same UV cut, Figure 3 shows the yellowness index values for Seesorb 703, Eversorb 74 and Chemsorb 234 . Variations in the index values are related to the aesthetic qualities of the lens, suggesting it is suitable for different types of applications.

The following tests are carried out on lenses containing Chemsorb 234 as UV absorbing agent.

New lenses were cast following the same steps as those described above, wherein Chemsorb 234 as UV absorbing agent was tested at different concentrations; starting from 0% (control) to 0,3% by weight relative to the total mass of the lens. The concentrations are calculated by weighting the mass of Chemsorb 234 deposited on the mold after drying and then converting to % by weight contained in the total mass of the lens.

Compared to the control lens devoid of UV absorbing agent which showed a UV cut of 308,8 nm, and a yellowness index of 1.09, the lens containing 0,3% by weight of Chemsorb 234 relative to the total mass of the lens showed a UV cut of 390,6 nm, and a yellowness index of 2.51, striking a good balance between UV protection and yellowness.

*Homogeneity and Haziness*

Independently of the tested concentration, observation with R17 Lamp showed that the UV absorbing agent is homogeneously spread on the surface of the lens and that the lens presents a haze level less than 1%, which is considered acceptable and to be devoid of haziness, as summarized in the table below.

| Sample of the photopolymerized lens | Observation |
|---|---|
| | R17 Lamp |
| 0.08% UV absorbing agent* | homogeneous no haziness |
| 0.15% UV absorbing agent* | |
| 0.18% UV absorbing agent* | |
| 0.30% UV absorbing agent* | |
| *The UV absorbing agent used is Chemsorb 234. | |

*Shore surface hardness*

The hardness of the photopolymerized lens was measured using a Durometer. The shore hardness scale outputs values between 0 and 100. The higher values denote harder materials. The lenses were measured for 5 positions per lens and the average results and standard deviation (STD) as below table.

| Sample of the photopolymerized lens | Surface hardness | |
|---|---|---|
| | Average | STD |
| 0% UV absorbing agent* (unsprayed) | 89.4 | 1.2 |

(continued)

| Sample of the photopolymerized lens | Surface hardness | |
|---|---|---|
| | Average | STD |
| 0.08% UV absorbing agent* | 82.6 | 3.6 |
| 0.15% UV absorbing agent* | 83.3 | 3.3 |
| 0.18% UV absorbing agent* | 86.0 | 3.5 |
| 0.30% UV absorbing agent* | 85.0 | 3.5 |
| MR8-Clear* | 87.8 | 2.6 |
| *The UV absorbing agent used is Chemsorb 234.<br>*MR8 clear is a standard production lens used as a comparative example. | | |

All the samples show that the surface hardness is pretty high, which is resistant to indentation damage and acceptable as they are comparable with standard MR8 lenses.

*Thermo-mechanical properties*

Tg (glass transition temperature) was characterized using a DMA (Dynamic Mechanical Analyzer Q800 Module). The DMA technique encompasses both surfaces of the lens.

The measurement was conducted over a temperature range of 25-140 °C at a heating rate of 2°C/min. The results are given in the table below.

| Sample of the photopolymerized lenses | Tg (°C) |
|---|---|
| 0% UV absorbing agent* | 115.34 |
| 0.07% UV absorbing agent* | 115.22 |
| MR8-Clear* | 114 |
| *The UV absorbing agent used is Chemsorb 234.<br>*MR8 clear is a standard production lens used as a comparative example. | |

The lenses obtained show similar thermo-mechanical properties as standard production lenses and are acceptable.

*Photo stability*

The photopolymerized lens was put in the Q-sun oven using a light power of 0.68 W/m2 for 80 hours to observe photo stability. It was arranged within the oven so that the light beam faces the surface containing the UV absorbing agent The light-resistant performance can be qualified using the parameter color evolution (ΔE), which is calculated using the equation below :

$$\Delta E = \sqrt{(\Delta L^*)^2 + (\Delta a^*)^2 + (\Delta b^*)^2}$$

where each individual term stands for:

$$\Delta L^* = L^*_{80} - L^*_{t0}$$

$$\Delta a^* = a^*_{80} - a^*_{t0}$$

$$\Delta b^* = b^*_{80} - b^*_{t0}$$

The results for Q-Sun time at initial state t = 0 hr are given in the table below :

| Concentration of UV absorbing agent* (%wt) | UV cut | YI | L* | a* | b* | c* | h* |
|---|---|---|---|---|---|---|---|
| 0% | 306.5 | 0.99 | 95.96 | -0.02 | 0.32 | 0.32 | 94.4 |
| 0.06% | 380.2 | 1.63 | 95.91 | -0.29 | 0.86 | 0.91 | 108.6 |
| 0.09% | 384.2 | 2.05 | 95.91 | -0.44 | 1.18 | 1.26 | 110.4 |

The results for Q-Sun time at t = 80 hr are given in the table below :

| Concentration of UV absorbing agent* (%wt) | UV cut | YI | L* | a* | b* | c* | h* | Evolution, ΔE (t = 80 hrs) |
|---|---|---|---|---|---|---|---|---|
| 0% | 299.7 | 5.84 | 94.96 | -0.89 | 3.39 | 3.51 | 104.7 | 3.34 |
| 0.06% | 380.1 | 1.81 | 95.72 | -0.24 | 0.93 | 0.96 | 104.8 | 0.21 |
| 0.09% | 383.9 | 2.16 | 95.44 | -0.34 | 1.18 | 1.23 | 105.9 | 0.48 |
| *The UV absorbing agent used is Chemsorb 234. | | | | | | | | |

The photopolymerized lens sprayed with Chemsorb 234 has an acceptable photostability under Q-sun for 80 hours.

NCO conversion

The Fourier Transform Infrared Spectroscopy (FTIR) technique was used to obtain the spectra, which were further calculated into NCO conversion. An increase in NCO conversion indicates a greater completion of polymerization.

The infrared transmission spectra at normal incidence were measured in a range of 500-4000 cm-1. The NCO conversion was calculated based on a spectrum of the final solid lens relative to liquid monomer obtained from FTIR, which is calculated using the equation below:

$$NCO\ conversion\ (\%) = \left(\frac{x-y}{x}\right) \cdot 100$$

where x is the ratio of NCO/CH2 of liquid monomer before photo polymerization and y is the ratio of NCO/CH2 of the final solid lens obtained.

The transmission corresponding to the NCO group frequency was taken at 2250 cm-1, and the peak at 2950 cm-1 assigned to the CH2 bond of the monomer was used as a normalized signal.

The obtained lenses were measured on both the sprayed side and the unsprayed side. Each was measured in 5 positions per side. The obtained lenses show a gradient of the degree of polymerization of the polyisocyanate from the sprayed side to the unsprayed side along said thickness of the substrate.

**Claims**

**1.** A method of manufacturing a polymeric cast substrate, the method comprising the steps of:

- providing a casting mold assembly containing two unsealed mold parts each having an inside surface and an outside surface, the inside surface of at least one of the unsealed mold parts comprising a composition comprising a UV absorbing agent
- arranging the inside surfaces of the mold parts opposite to each other and closing the casting mold assembly so that the inside surfaces of both mold parts form together the molding cavity;
- filling a polymerizable composition in the molding cavity;
- curing the polymerizable composition in the mold assembly to obtain a polymeric cast substrate.

2. The method of claim 1, wherein the inside surface of at least one of the unsealed mold parts comprising a composition comprising a UV absorbing agent is obtained by depositing the composition comprising a UV absorbing agent on the inside surface of at least one of the unsealed mold parts.

3. The method of claim 2, wherein depositing the composition comprising a UV absorbing agent on the inside surface of at least one of the mold parts is performed by liquid phase deposition.

4. The method of claims 2 or 3, wherein depositing the composition comprising a UV absorbing agent on the inside surface of at least one of the mold parts is performed by spin coating, spray coating, brush coating, dip coating, or roller coating.

5. The method of any one of claims 2 to 4, further comprising a drying step after depositing the composition comprising a UV absorbing agent on the inside surface of at least one of the mold parts.

6. The method of any one of claims 1 to 5, wherein curing of the mold assembly comprises a UV curing step.

7. The method of any one of claims 2 to 6, wherein depositing of the composition comprising a UV absorbing agent is carried out on the inside surface of only one of the mold parts and wherein the filling of the polymerizable composition in the molding cavity is carried out via a filling nozzle directed towards the opposite inside surface of the other mold part that is devoid of the composition comprising a UV absorbing agent so that the polymerizable composition flows along the inside surface of said other mold part.

8. The method of claim 7, wherein the filling nozzle and the inside surface of the other mold part that is devoid of the composition comprising a UV absorbing agent are positioned relative to one another to form an angle between 20° to 45° so that the polymerizable composition flows along the inside surface of said other mold part.

9. The method of any one of claims 1 to 8, wherein the UV absorbing agent is chosen from a triazole, a triazine, a benzophenone, a benzylidene malonate, a cyanoacrylate, a malononitrile, an oxazole, an oxazolone, a barbituric acid derivative, a Meldrum's acid derivative, a thiazole, a metal oxide, a metal dioxide, a salicylate ester, a cinnamate ester, a p-aminobenzoate derivative, or combinations thereof.

10. The method of any one of claims 1 to 9, wherein the polymerizable composition is chosen from a mixture of one or more polyisocyanate(s) with one or more polythiol(s) or polyol(s).

11. The method of any one of claims 1 to 10, wherein the polymeric cast substrate has a UV cut between 300 nm and 400 nm, preferably between 350 nm and 400 nm, more preferably between 370 nm and 400 nm.

12. An optical article, preferably a lens, comprising a polymeric cast substrate obtained from the curing of a mixture of one or more polyisocyanate(s) with one or more polythiol(s) or polyol(s), the thickness of the substrate being defined by the distance between a front surface and a rear surface, wherein the polymeric cast substrate comprises a gradient of concentration of a UV absorbing agent from the front surface to the rear surface along said thickness of the substrate.

13. The optical article of claim 12, wherein the polymeric cast substrate comprises a gradient of the polymerization degree of the polyisocyanate from the front surface to the rear surface along said thickness of the substrate.

14. The optical article of claim 12or 13, wherein the polymeric cast substrate has a color evolution ($\Delta E$) of less than 3, preferably less than 1, more preferably less than 0.5 using a light power of 0.68 W/m2 for 80 hours.

15. An eyewear comprising an optical article according to any one of claims 12 to 14, or a polymeric cast substrate manufactured by the method of any one of claims 1 to 11.

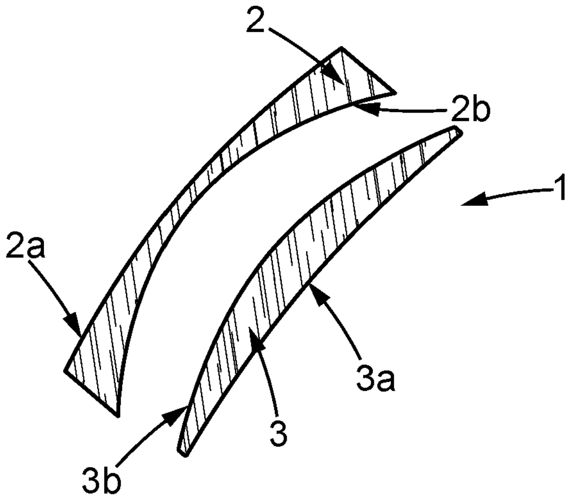


FIG. 1

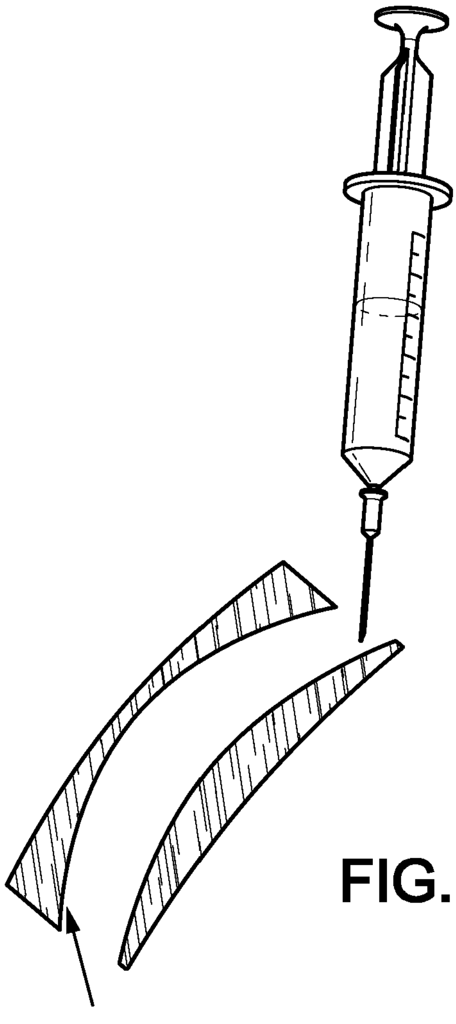

FIG. 2

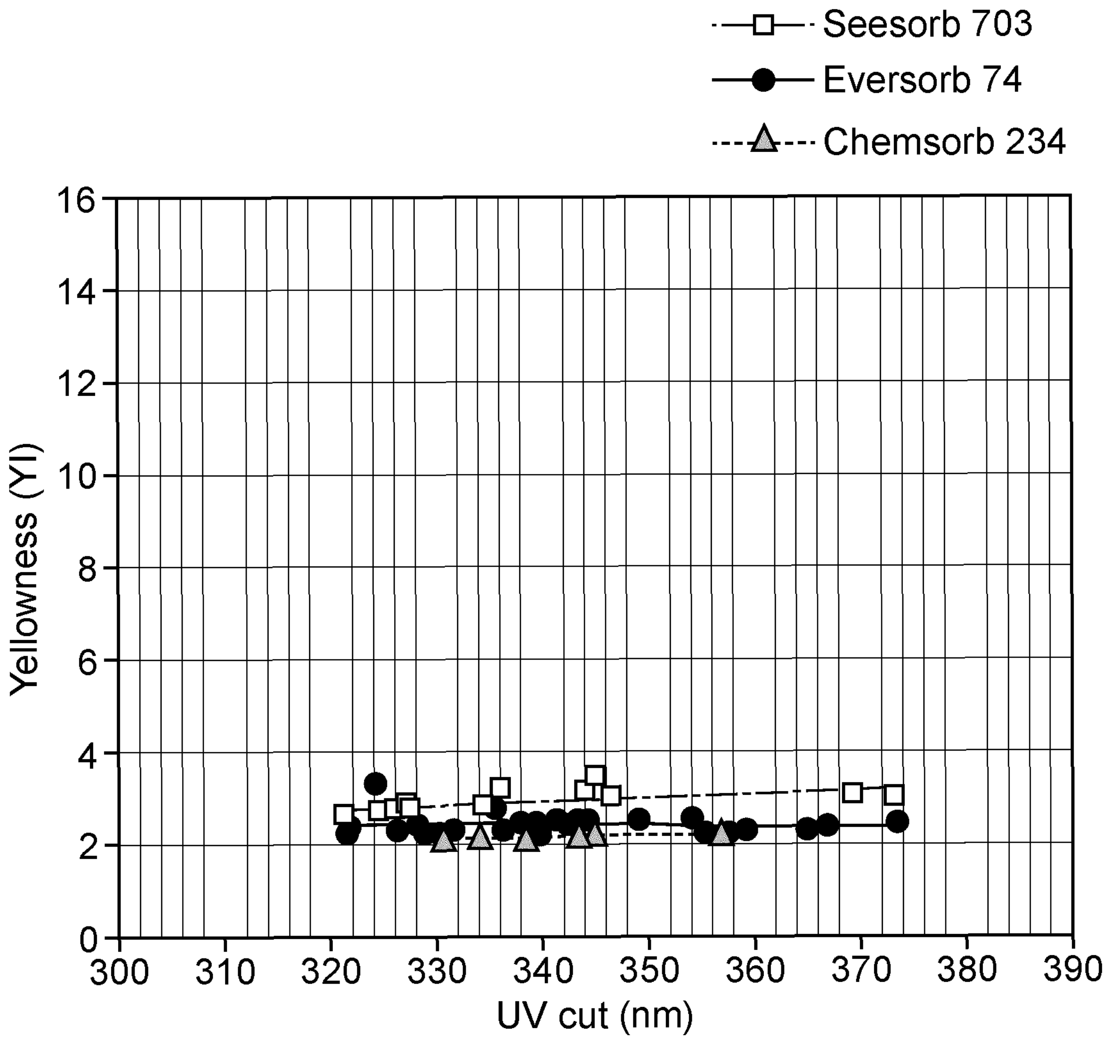
Seesorb 703
Eversorb 74
Chemsorb 234
Yellowness (YI)
16
14
12
10
8
6
4
2
0
300
310
320
330
340
350
360
370
380
390
UV cut (nm)

FIG. 3

Europäisches Patentamt
European Patent Office
Office européen des brevets

# EUROPEAN SEARCH REPORT

Application Number
EP 24 30 7074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/241174 A1 (FROMENTIN PIERRE [TH] ET AL) 30 July 2020 (2020-07-30) | 1-6,9-11 | INV. B29D11/00 |
| A | * abstract * * figure 1 * * paragraphs [0040], [0057], [0068] - [0082], [0104] - [0109] * ----- | 7,8 | |
| X | EP 1 549 483 B1 (SIGNET ARMORLITE INC [US]) 16 April 2008 (2008-04-16) | 1-6,9,11 | |
| A | * abstract * * figures 1-5 * * paragraphs [0026] - [0030], [0074] - [0084] * ----- | 7,8 | |
| X | US 5 096 626 A (TAKAMIZAWA MORIO [JP] ET AL) 17 March 1992 (1992-03-17) | 1-6,9,11 | |
| A | * abstract * * figures 1-4 * * column 2, line 44 - column 5, line 25 * ----- | 7,8 | |

TECHNICAL FIELDS SEARCHED (IPC)

B29D
G02C
B29C

~~The present search report has been drawn up for all claims~~

1

| Place of search | Date of completion of the search | Examiner |
|---|---|---|
| Munich | 9 May 2025 | Heckmann, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number
EP 24 30 7074

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-11

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 24 30 7074

The Search Division considers that the present European patent application does not comply with the requirements of unity of invention and relates to several inventions or groups of inventions, namely:

1. claims: 1-11

A method of manufacturing a polymeric cast substrate wherein depositing of the composition comprising a UV absorbing agent is carried out on the inside surface of only one of the mold parts and wherein the filling of the polymerizable composition in the molding cavity is carried out via a filling nozzle directed towards the opposite inside surface of the other mold part that is devoid of the composition comprising a UV absorbing agent so that the polymerizable composition flows along the inside surface of said other mold part.

---

2. claims: 12-15

An optical article wherein the polymeric cast substrate comprises a gradient of concentration of a UV absorbing agent from the front surface to the rear surface along said thickness of the substrate.

---

## ANNEX TO THE EUROPEAN SEARCH REPORT ON EUROPEAN PATENT APPLICATION NO. EP 24 30 7074

This annex lists the patent family members relating to the patent documents cited in the above-mentioned European search report. The members are as contained in the European Patent Office EDP file on
The European Patent Office is in no way liable for these particulars which are merely given for the purpose of information.

09-05-2025

| Patent document cited in search report | Publication date | Patent family member(s) | Publication date |
|---|---|---|---|
| US 2020241174 A1 | 30-07-2020 | BR 112020002677 A2 | 28-07-2020 |
| | | CN 110998372 A | 10-04-2020 |
| | | EP 3441799 A1 | 13-02-2019 |
| | | EP 3665515 A1 | 17-06-2020 |
| | | US 2020241174 A1 | 30-07-2020 |
| | | WO 2019030264 A1 | 14-02-2019 |
| EP 1549483 B1 | 16-04-2008 | AT E392305 T1 | 15-05-2008 |
| | | AU 2002323558 A1 | 19-03-2004 |
| | | DE 60226180 T2 | 18-06-2009 |
| | | EP 1549483 A1 | 06-07-2005 |
| | | ES 2305276 T3 | 01-11-2008 |
| | | WO 2004020183 A1 | 11-03-2004 |
| US 5096626 A | 17-03-1992 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2024223878 A
- EP 394495 A
- US 4775733 A
- US 4662376 A
- US 4975328 A
- EP 271839 A
- EP 23307368 A
- US 6786598 B2
- EP 1418211 A
- US 5997621 A